# EUROPEAN PATENT APPLICATION

(11) **EP 2 026 574 A2**
(43) Date of publication of application: **18.02.2009**
(21) Application number: 08162365.4
(22) Date of filing: 14.08.2008
(51) Int. Cl.: H04N 5/775

(54) **Display apparatus and control method thereof**

(30) Priority: 17.08.2007 KR 20070082941
(71) Applicant: Samsung Electronics Co., Ltd, Suwon-si, Gyeonggi-do 442-742 (KR)
(72) Inventor: Park, Jung-il, Gyeonggi-do, Suwon-si (KR)
(74) Representative: Waddington, Richard

(57) **Abstract**

A display apparatus includes: a plurality of external device interfaces (10) which is connectable with an external device; an address setting unit (20) which sets a logical address corresponding to the external device, if the external device interface (10) is connected with the external device; a UI (user interface) generator (30) which generates UI information to control the external device; and a controller (50) which controls the UI generator (30) to display an external device menu window showing a type of the external device according to the logical address corresponding to the external device, on the display unit.

## Description

### BACKGROUND OF THE INVENTION

### Field of the Invention

Apparatuses and methods consistent with the present invention relate to a display apparatus and a control method thereof, and more particularly, to a display apparatus which has a plurality of external device interfaces, and a control method thereof.

### Description of the Related Art

In recent years, a display apparatus such as a TV has been connected with an external device such as an audio/video device. Various types of interfaces have been provided to connect the external device to the display apparatus. The interfaces connecting the display apparatus and the external device can be classified as an analog interface and a digital interface depending on types of video signals. The display apparatus and the external device are connected with each other through a cable which is different according to a standard supporting the interface.

A high definition multimedia interface (HDMI) is an interface which can connect a digital audio signal and a digital video signal through a single cable without compression. As video and multi-channel audio are transmitted through a single cable, the HDMI is cost-effective and has a simple configuration.

If the external device having the HDMI is connected with the display apparatus, a physical address and a logical address are set. The physical address is based on a physical connection port connected with the external device while the logical address is required to perform communication through a consumer electronics control (CEC) channel. If the external device is connected with the display apparatus, a display unit displays an external device menu window to inform the connection of the external device.

In this case, the types of the external devices are displayed on the external device menu window according to the physical address of the plurality of external devices. Thus, a user should select items several times to control the external device, which causes inconvenience to a user.

### SUMMARY OF THE INVENTION

Accordingly, the invention provides a display apparatus which displays an external device menu window according to a logical address, and a control method thereof.

Also, the invention provides a display apparatus which controls a frequently-used external device without difficulty, and a control method thereof.

Further, the invention provides a display apparatus which displays UI (user interface) information to control an external device without difficulty, and a control method thereof.

Additional aspects of the present invention will be set forth in part in the description which follows and, in part, will be obvious from the description, or may be learned by practice of the present invention.

According to the present invention there is provided an apparatus and method as set forth in the appended claims. Other features of the invention will be apparent from the dependent claims, and the description which follows.

According to an aspect of the invention there is provided a display apparatus which has a display unit, the display apparatus including: a plurality of external device interfaces which are connectable with an external device; an address setting unit which sets a logical address corresponding to the external device, if the external device interface is connected with the external device; a UI (user interface) generator which generates UI information to control the external device; and a controller which controls the UI generator to display an external device menu window showing a type of the external device according to the logical address corresponding to the external device, on the display unit.

The controller may count setting frequencies of the set logical address, and controls the UI generator to display the external device according to high setting frequencies on the external device menu window.

The external device interface may include a high definition multimedia interface (HDMI) which has a consumer electronics control (CEC) channel.

The address setting unit may include a table showing the logical address corresponding to the external device.

The external device interface may be connectable with the external device connected with other external devices in a chain through at least one sub external device interface, and the address setting unit may set a physical address corresponding to a physical position of the external device interface or the sub external device interface if the external device is connected through the external device interface or the sub external device interface.

The controller may control the UI generator to display the type of the external device according to low physical addresses on the external device menu window if the same type of external devices are connected.

The display apparatus may further include a user selection unit which is provided to change or set a display sequence of the external device on the external device menu window.

The controller may control the UI generator to display a menu window on the display unit to change or set the display sequence of the external device on the external device menu window.

According to another aspect of the invention there is provided a control method of a display apparatus which has a display unit including a plurality of external device interfaces to be connected with an external device, the control method including: setting a logical address corresponding to the external device if the external device interface is connected with the external device; and displaying an external device menu window showing a type of the external device according to a logical address corresponding to the external device.

The control method may further include counting setting frequencies of the set logical address, wherein the displaying the external device menu window may include displaying the type of the external device according to high setting frequencies.

The external device interface may include a high definition multimedia interface (HDMI) which has a consumer electronics control (CEC) channel.

The external device interface may be connectable with the external device connected with other external devices in a chain through at least one sub external device interface, the method may further include: setting a physical address corresponding to a physical position of the external device interface or the sub external device interface if the external device is connected.

The displaying the external device menu window may include displaying a type of the external device according to low physical addresses if the same type of external devices is connected.

### BRIEF DESCRIPTION OF THE DRAWINGS

The above and/or other aspects of the present invention will become apparent and more readily appreciated from the following description of the embodiments, taken in conjunction with the accompanying drawings of which:
FIG. 1 is a control block diagram of a display apparatus according to a first exemplary embodiment of the present invention;
FIG. 2 illustrates a method of setting a physical address according to the first exemplary embodiment of the present invention;
FIG. 3 illustrates a method of setting a logical address according to the first exemplary embodiment of the present invention;
FIG. 4 illustrates an external device menu window according to the first exemplary embodiment of the present invention;
FIG. 5 is a control flowchart to describe a control method of the display apparatus according to the first exemplary embodiment of the present invention;
FIG. 6 is a control block diagram of a display apparatus according to a second exemplary embodiment of the present invention; and
FIG. 7 illustrates an external device menu window to change types of an external device according to the second exemplary embodiment of the present invention.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

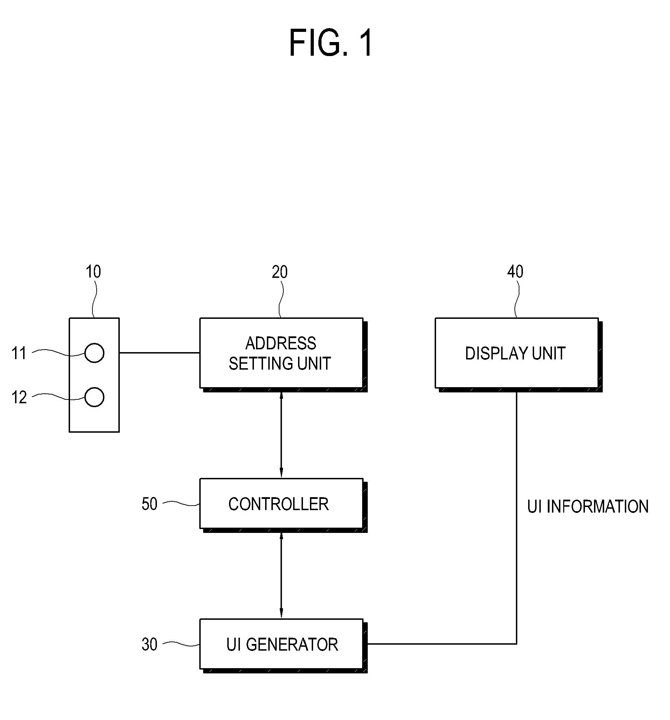

FIG. 1 is a control block diagram of a display apparatus according to a first exemplary embodiment of the present invention.

As shown therein, a display apparatus 100 according to the present embodiment includes an external device interface 10, an address setting unit 20, a UI (user interface) generator 30, a display unit 40 and a controller 50 which controls the foregoing elements.

The external device interface 10 includes a first external device interface 11 and a second external device interface 12 to be connected with an external device. The external device interface 10 includes an external device connection port as a physical connector to be connected with an external device, a communication unit to communicate with the external device connected with the external device connection port, and a communication protocol applying to the foregoing elements.

The external device interface 10 includes a high definition multimedia interface (HDMI). The first and second external device interfaces 11 and 12 are connected with an HDMI cable. The HDMI is an interface which transmits a digital audio signal and a digital video signal through a single cable without compression. The HDMI transmits multi-channel audio signals, and is compatible with a DVI (digital video interface) terminal since it supports a non-compressed digital interface, too. The HDMI integrates the video and multi-channel audio to a single cable, thereby promoting cost-effectiveness and having a smaller size than a DVI and a simple configuration. The external device interface 10 may be connected with a digital versatile disc (DVD) device, a set-top box, an audio-video device, an audio system, a computer, a game console, a recording system, etc. The HDMI includes a consumer electronics control (CEC) channel which is a communication protocol for controlling the external device. The CEC channel provides functions to detect operations, on screen display (OSD) and power-on or off of the external device, and communicates based on a logical address (to be described later). The number of the external device interfaces 10 is not limited to a pair.

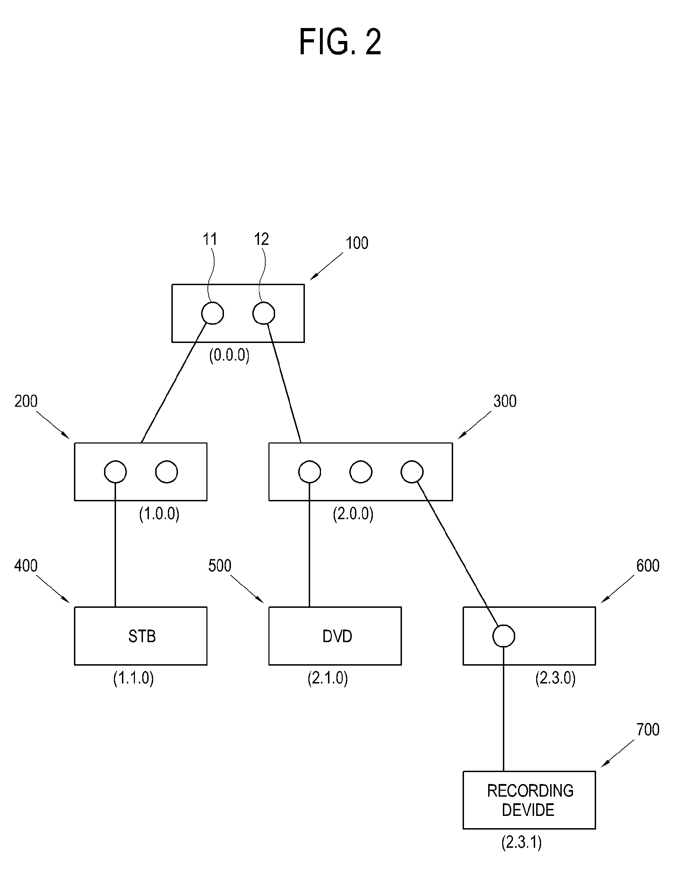

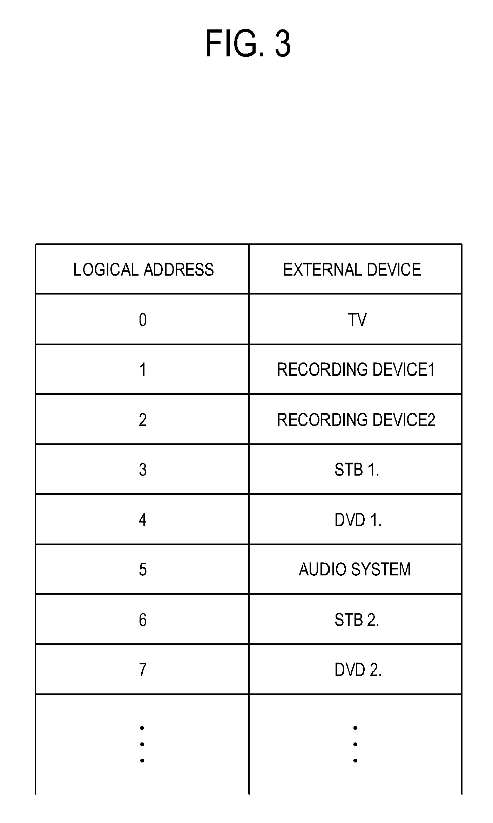

The address setting unit 20 sets a physical address and a logical address corresponding to the external device if the external device is connected with the external device interface 10. The physical address refers to an address which is required for the external device to recognize a physical position of the external device interfaces 11 and 12 connected with the display apparatus 100. The logical address is an address which is required for the display apparatus 100 to recognize types of an inputted signal of the external device and to communicate with the external device. FIG. 2 illustrates a method of setting the physical address. FIG. 3 illustrates a method of setting the logical address. As shown in FIG. 2, the first external device interface 11 is connected with a first external device 200 while the second external device interface 12 is connected with a second external device 300. The respective external devices 200 and 300 are connected with one or two external devices 400, 500 and 600. The first and second external devices 200 and 300 connected with the external device interfaces 11 and 12 include a sub external device interface. The external device 600 which is connected with a third sub external device port of the second external device 300 is connected with another external device, i.e., a recording device 700. As described above, the display apparatus 100 may be connected with a plurality of external devices in a chain. The address setting unit 20 sets the physical address and the logical address to separately control a video signal or an audio signal inputted by the plurality of external devices.

The physical address of the display apparatus 100 is (0.0.0). A first physical address of the first external device 200 connected with the first external device interface 11 is 1. A first physical address of the second external device 300 connected with the second external device interface 12 is 2. Sequentially, a second physical address of a set-top box (STB) 400 connected with the first sub external device port of the first external device 200 is 1. A physical address of a DVD device 500 connected with the first sub external device port of the second external device 300 is (2.1.0). A physical address of the recording device 700 is (2.3.1). If the external devices 200 to 700 are connected with the display apparatus 100, the external devices 200 to 700 exchange recognition information with the display apparatus 100. The address setting unit 20 recognizes respective signals inputted by respective external device interfaces 11 and 12, and assigns a physical address to the respective external devices 200 to 700 as described above.

The address setting unit 20 determines a video signal or an audio signal inputted by the external devices 200 to 700, and sets a logical address corresponding to the external devices 200 to 700. FIG. 3 illustrates a table of the address setting unit 20. The table represents a physical address corresponding to the external devices 200 to 700. The address setting unit 20 determines the inputted video signal or audio signal, and assigns a logical address to the respective external devices 200 to 700 according to types thereof. That is, a logical address of the STB 400 is 3, and a logical address of the DVD device 500 is 4. A logical address of the recording device 700 is 1. If external devices which output the same kind of signals, e.g. if two DVD devices are connected with the display apparatus 100, a logical address of the first DVD device is 4 and that of the second DVD device is 7.

The external device interfaces 11 and 12 according to the present embodiment are HDMI, and the method or process of setting the addresses apply to known HDMI standards. Alternatively, the address setting unit 20 may set addresses with respect to video signals or audio signals inputted by the external devices 200 to 700, instead of using the table.

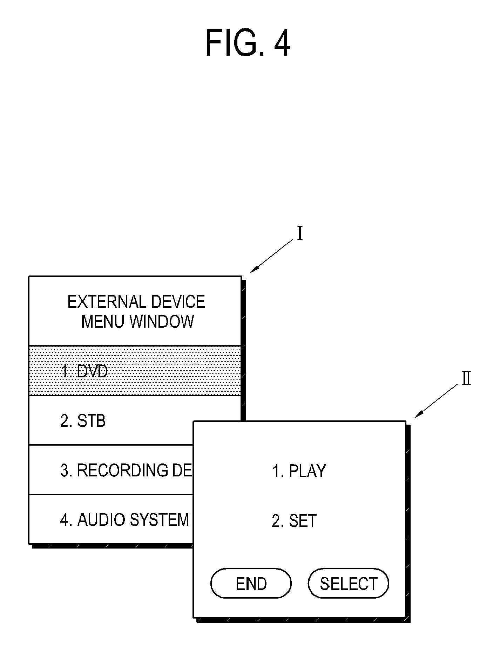

The UI generator 30 provides UI information on the external device control to a user according to a control of the controller 50. If the display apparatus 100 is connected with the external devices 200 to 700, the UI generator 30 displays various UI information on the display unit 40 so that a user controls the external devices 200 to 700 through the CEC channel. As shown in FIG. 4, the UI information generated by the UI generator 30 includes an external device menu window I and an external device control window || to select or set the external devices 200 to 700.

The display unit 40 displays a video signal transmitted by the external devices 200 to 700. The display unit 40 may include a cathode ray tube (CRT), a liquid crystal display (LCD) panel, an organic light emitting diode (OLED) panel or a plasma display panel (PDP). The display unit 40 displays the external device menu window I and the external device control window || which are generated by the UI generator 30.

If the display apparatus 100 is connected with the external devices 200 to 700, the controller 50 displays the external device menu window I according to the logical address of the external devices 200 to 700.
Particularly, the controller 50 counts setting frequencies of the logical address set by the address setting unit 20, and controls the UI generator 30 to display types of the external devices on the external device menu window I according to high frequencies. If the external devices 200 to 700 are connected with the display apparatus 100, the logical address of the external devices 200 to 700 is fixed while the physical address is changed by an actual connection port. A display unit of a conventional display apparatus displays an external device menu window which shows types of the external devices according to a physical address thereof. Unless the frequently-used external device has the lowest physical address, a user should move a direction key or select items several times to control the concerned external device. Otherwise, a user should reconnect the external device with a connection port having the lowest physical address. However, according to the present invention, the controller 50 displays the external device menu window I according to the logical address, and the configuration of the external device menu window I is not affected by the physical position of the external devices 200 to 700. For example, if the display apparatus 100 is connected with the STB 400 connected with a DVD device I and an A/V receiver, the external device menu window I shows external devices in sequence of the STB 400, the DVD device 1 and the A/V receiver. If a DVD device 2 is additionally connected with the STB 400, the external device menu window I shows the external devices in sequence of the STB 400, the DVD device 1, the DVD device 2 and the A/V receiver. If the DVD device 2 is connected with the A/V receiver, the external devices are displayed on the external device menu window I in sequence of the STB 400, the DVD device 1, the A/V receiver and the DVD device 2. The configuration of the external device menu window I depends on the interface connected with the DVD device 2. The display apparatus 100 according to the present embodiment displays the external device most frequently connected with the display apparatus 100 by a user, i.e., the external device having the most logical addresses, on top of the external device menu window | . Thus, a user may easily control the most frequently-used external device through the UI. FIG. 4 illustrates the external device menu window I according to the present embodiment, which displays types of the external devices according to the setting frequencies of the logical address. If the types of the external devices are displayed according to a particular sequence of the physical address as shown in FIG. 2, the first external device 200 may be displayed on top of the external device menu window | , followed by the STB 400, the second external device 300, the DVD device, ... and the recording device 700. Instead, according to the present embodiment, the DVD device which is most-frequently connected by a user is displayed on top of the external device menu window | , followed by the STB 400 and the recording device 700. If the DVD is selected, the external device control window || may be displayed to control the DVD device.

If the same kind of the external device is connected with the display apparatus 100, the controller 50 controls to display the types of the external devices in sequence of a low physical address, on the external device menu window|. That is, if an additional DVD device is connected instead of the recording device 700 in FIG. 2, the DVD device 500 which has a low physical address (2.1.0) is displayed thereon first, and then a DVD device having a physical address (2.3.1) is displayed.

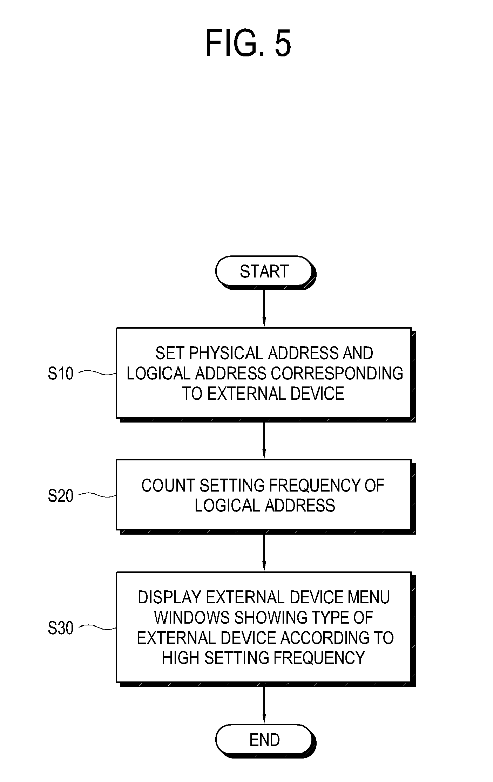

FIG. 5 is a control flowchart to describe a control method of the display apparatus 100 according to the present embodiment. The control method according to the present embodiment will be described with reference to FIG. 5.

First, if the external device is connected with the display apparatus 100, the address setting unit 20 sets the physical address and the logical address corresponding to the external device (S10).

The controller 50 counts the setting frequencies of the logical address (S20), and determines the type of the external device frequently connected with the display apparatus 100.

If a user selects or a particular event occurs (e.g. if the external device is connected), the controller 50 controls the UI generator 30 to display the external device menu window I on the display unit 40. The external device menu window I shows the types of the external devices 200 to 700 according to high setting frequencies (S30).

According to another exemplary embodiment, the display apparatus 100 may include an interface other than the HDMI as the external device interfaces 11 and 12. The address setting unit 20 may generate addresses according to video signals and audio signals inputted by the external devices 200 to 700, instead of using the table.

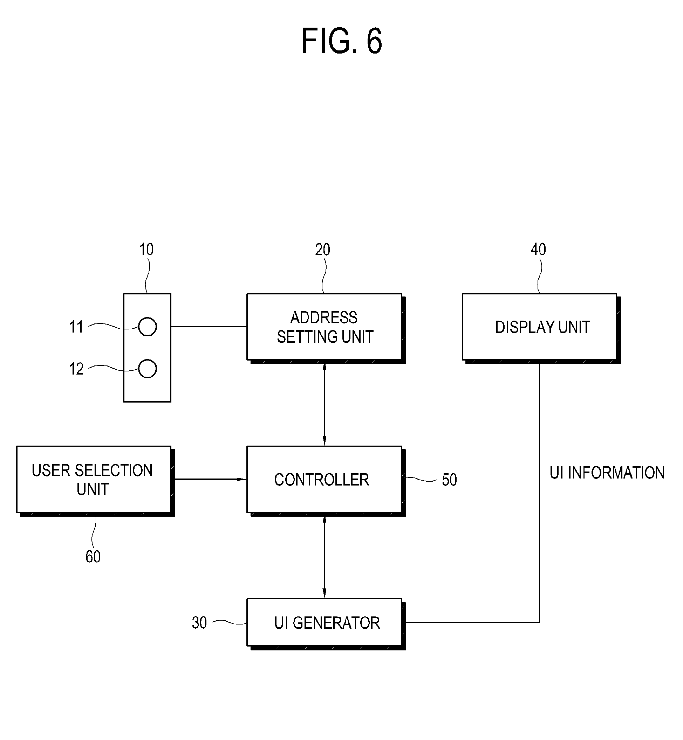

FIG. 6 is a control block diagram of a display apparatus according to a second exemplary embodiment of the present invention.

As shown therein, a display apparatus 101 according to the present embodiment further includes a user selection unit 60. The user selection unit 60 is provided to set and change a display sequence of external devices 200 to 700 displayed on an external device menu window | . In this case, a priority is assigned to a logical address of the external devices by the user selection unit 60. A controller 50 forms the external device menu window I according to the priority. For example, if a user sequentially assigns a priority to the logical addresses of a DVD 1 and a STB, the external device menu window I shows the DVD 1 and the STB regardless of a physical address or setting frequencies of the external devices. The controller 50 may display a setting window on the display unit 40 to set the display sequence of the external devices according to the logical address.

Unlike the first exemplary embodiment, the user selection unit 60 may set a default to display the types of the external devices according to the physical address of the external devices, or may not display a particular type of the external devices according to user's preference.

The user selection unit 60 may include a remote controller or a touch panel having a plurality of direction keys, or may include an input device such as a mouse and a keyboard to be connected with a computer system.

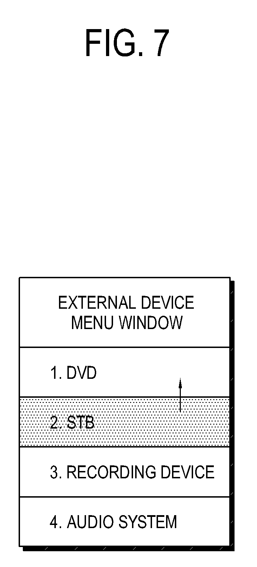

FIG. 7 illustrates an external device menu window I to change a display sequence of the external devices according to the present embodiment. As shown therein, a user may change the display sequence through the user selection unit 60 while the types of the external devices are displayed. First, a user selects the type of the external device to be changed, and moves it by a direction key or drags it by a mouse. Then, a user may change the display sequence of the external devices regardless of the setting frequencies of the logical address. The changed external device menu window I may be stored in a storage unit (not shown). If the changed external device menu window I is temporarily stored in the display apparatus 101, it may be removed when the display apparatus 101 is powered-off. A subsequent external device menu window I may display the external devices according to the setting frequencies of the logical address. Meanwhile, if the changed external device menu window I is permanently stored or set as a default, a subsequent external device menu window I may display the external devices according to the sequence changed by a user, i.e. according to the logical address of the external devices changed by a user.

As described above, the present invention provides a display apparatus which displays an external device menu window according to a logical address, and a control method thereof.

Also, the present invention provides a display apparatus which controls a frequently-used external device without difficulty, and a control method thereof.

Further, the present invention provides a display apparatus which displays UI information to easily control an external device, and a control method thereof.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a plurality of external device interfaces (10) which are connectable with an external device (200/300);
an address setting unit (20) which sets a logical address corresponding to the external device (200/300), if the external device interface (10) is connected with the external device (200/300);
a UI, user interface, generator (30) which generates UI information to control the external device (200/300); and
a controller (50) which controls the UI generator (30) to display an external device menu window showing a type of the external device (200/300) according to the logical address corresponding to the external device (200/300), on a display unit.

2. The display apparatus according to claim 1, wherein the controller (50) counts setting frequencies of the set logical address, and controls the UI generator (30) to display the external device (200/300) according to high setting frequencies on the external device menu window.

3. The display apparatus according to any preceding claim, wherein the external device interface (10) comprises a high definition multimedia interface, HDMI, which has a consumer electronics control, CEC, channel.

4. The display apparatus according to any preceding claim, wherein the address setting unit (20) comprises a table showing the logical address corresponding to the external device (200/300).

5. The display apparatus according to any preceding claim, wherein the external device interface (10) is connectable with the external device (200/300) connected with other external devices (400,500,600) in a chain through at least one sub external device interface, and the address setting unit (20) sets a physical address corresponding to a physical position of the external device interface (10) or the sub external device interface if the external device (200/300) is connected through the external device interface (10) or the sub external device interface.

6. The display apparatus according to any preceding claim, wherein the controller (50) controls the UI generator (30) to display the type of the external device (200/300) according to low physical addresses on the external device menu window if the same type of external devices is connected.

7. The display apparatus according to any preceding claim, further comprising a user selection unit (60) which is provided to change or set a display sequence of the external device (200/300) on the external device menu window.

8. The display apparatus according to claim 7, wherein the controller (50) controls the UI generator (30) to display a menu window on the display unit to change or set the display sequence of the external device (200/300) on the external device menu window.

9. The display apparatus of any preceding claim, wherein the display apparatus comprises the display unit.

10. A control method of a display apparatus which has a display unit including a plurality of external device interfaces (10) to be connected with an external device (200/300), the control method comprising:
setting a logical address corresponding to the external device (200/300) if the external device interface (10) is connected with the external device (200/300); and
displaying an external device menu window showing a type of the external device (200/300) according to a logical address corresponding to the external device (200/300).

11. The control method according to claim 10, further comprising counting setting frequencies of the set logical address, wherein the displaying the external device menu window comprises displaying the type of the external device (200/300) according to high setting frequencies.

12. The control method according to claim 10 or claim 11, wherein the external device interface (10) comprises a high definition multimedia interface, HDMI, which has a consumer electronics control, CEC, channel.

13. The control method according to claim 12, wherein the external device interface (10) is connectable with the external device (200/300) connected with other external devices (400,500,600) in a chain through at least one sub external device interface, the method further comprising setting a physical address corresponding to a physical position of the external device interface (10) or the sub external device interface if the external device (200/300) is connected.

14. The control method according to claim 12 or claim 13, wherein the displaying the external device menu window comprises displaying a type of the external device (200/300) according to low physical addresses if the same type of external devices is connected.
